# EUROPÄISCHE PATENTANMELDUNG

(11) **EP 3 038 073 A1**
(43) Veröffentlichungstag der Anmeldung: **29.06.2016**
(21) Anmeldenummer: 14200010.8
(22) Anmeldetag: 23.12.2014
(51) Int. Cl.: G08C 17/02

(54) **Verfahren zur eindeutigen Zuordnung einer Fernbedienung zu einem Gerätesystem**

(71) Anmelder: HILTI Aktiengesellschaft, 9494 Schaan (LI)
(72) Erfinder: Brugger, Peter, 6800 Feldkirch (AT); Kaneider, Wilfried, 6830 Rankweil (AT); Studer, Georg, 6712 Thueringen (AT)
(74) Vertreter: Hilti Aktiengesellschaft Corporate Intellectual Property

(57) **Zusammenfassung**

Verfahren zur eindeutigen Zuordnung einer als Fernbedienung ausgebildeten ersten Systemkomponente (14) eines Gerätesystems (10) zu einer zweiten und dritten Systemkomponente (13, 12) des Gerätesystems (10), wobei die Fernbedienung (14) über eine draht- und kabellose Kommunikationsverbindung (35) oder eine erste Kabel- oder Steckverbindung (36) mit der zweiten Systemkomponente (13) verbindbar ist.

## Beschreibung

### Technisches Gebiet

Die vorliegende Erfindung betrifft ein Verfahren zur eindeutigen Zuordnung einer Fernbedienung zu einem Gerätesystem gemäß dem Oberbegriff des Anspruchs 1 sowie ein Gerätesystem zur Durchführung eines derartigen Verfahrens zur eindeutigen Zuordnung gemäß dem Oberbegriff des Anspruchs 13.

### Stand der Technik

Husqvarna vertreibt ein als Wandsägesystem ausgebildetes Gerätesystem mit einer Fernbedienung an, die über eine Funkverbindung draht- und kabellos mit dem Wandsägesystem verbindbar ist. Die Fernbedienung umfasst eine erste Kontrolleinheit und eine Eingabeeinrichtung mit Steuerelementen und Eingabetasten; die Eingaben an der Eingabeeinrichtung werden von der ersten Kontrolleinheit in Steuerbefehle und Daten umgewandelt. Das Wandsägesystem umfasst eine Führungsschiene, ein an der Führungsschiene verschiebbar angeordnetes Werkzeuggerät, ein Elektronikaggregat und die Fernbedienung. Das Werkzeuggerät ist als Wandsäge ausgebildet und umfasst einen Sägekopf und eine motorische Vorschubeinheit. Der Sägekopf umfasst ein Bearbeitungswerkzeug, das als Sägeblatt ausgebildet ist und von einem Antriebsmotor um eine Drehachse angetrieben wird. Die motorische Vorschubeinheit umfasst einen Führungsschlitten und einen Vorschubmotor; der Sägekopf ist auf dem Führungsschlitten angeordnet und wird vom Vorschubmotor entlang einer Vorschubrichtung auf der Führungsschiene verfahren.

Sämtliche Elektronikkomponenten zur Versorgung und Steuerung der Motoren sind im Elektronikaggregat angeordnet. Das Elektronikaggregat umfasst eine erste Elektronikeinheit, die den Antriebsmotor elektrisch versorgt, und ein erstes Steuerelement, das den Antriebsmotor steuert, sowie eine weitere Elektronikeinheit, die den Vorschubmotor elektrisch versorgt, und ein weiteres Steuerelement, das den Vorschubmotor steuert. Die Steuerelemente bilden gemeinsam eine zweite Kontrolleinheit zur Steuerung der Wandsäge. Das Elektronikaggregat ist über eine erste Kommunikationsverbindung mit der Fernbedienung und über eine zweite Kommunikationsverbindung mit der Wandsäge verbunden. Die erste Kommunikationsverbindung ist als Funkverbindung oder als erstes Kommunikationskabel ausgebildet. Die zweite Kommunikationsverbindung kann als zweites Kommunikationskabel ausgebildet sein oder die Daten- und Steuerleitungen der zweiten Kommunikationsverbindung können mit den elektrischen Versorgungsleitungen zwischen dem Elektronikaggregat und der Wandsäge in ein gemeinsames Verbindungskabel integriert sein. Die US-Anmeldung 2011/0056716 A1 von Husqvarna offenbart Details zum Aufbau eines gemeinsamen Verbindungskabels zwischen dem Elektronikaggregat und der Wandsäge.

Als Sicherheitsmaßnahme ist vorgesehen, dass beim ersten Einschalten der Fernbedienung eine Zuordnung zwischen der Fernbedienung und dem Elektronikaggregat durchgeführt werden muss und die Fernbedienung erst nach erfolgter Zuordnung eingesetzt werden kann. Durch die Zuordnung soll sichergestellt werden, dass ein Elektronikaggregat nur von einer Fernbedienung gesteuert werden kann. Die Zuordnung der Fernbedienung zum Elektronikaggregat erfolgt über das erste Kommunikationskabel, das als CAN-Kabel ausgebildet ist. Das CAN-Kabel wird mit der Fernbedienung und dem zu verbindenden Elektronikaggregat verbunden und die entsprechende Routine zur Zuordnung an der Fernbedienung gestartet; auf dem Display der Fernbedienung erscheint eine Meldung, ob die Zuordnung zwischen der Fernbedienung und dem Elektronikaggregat erfolgreich war oder nicht.

Die beim Wandsägesystem von Husqvarna realisierte Zuordnung hat den Nachteil, dass die Zuordnung nur zwischen der Fernbedienung und dem Elektronikaggregat erfolgt und die Wandsäge bei der Zuordnung unberücksichtigt bleibt, so dass mit der Fernbedienung verschiedene Wandsägen gesteuert werden können. Jede Wandsäge, die über ein passendes Verbindungskabel mit dem zugeordneten Elektronikaggregat verbunden wird, wird über die Fernbedienung gesteuert. Daraus kann ein Sicherheitsrisiko für den Bediener resultieren, wenn nicht die vom Bediener erwartete Wandsäge mittels der Fernbedienung gesteuert wird. Das Sicherheitsrisiko nimmt auf unübersichtlichen Baustellen mit mehreren Werkzeuggeräten und Elektronikaggregaten zu.

### Darstellung der Erfindung

Die Aufgabe der vorliegenden Erfindung besteht darin, bei Gerätesystemen mit einer Fernbedienung, die über eine draht- und kabellose Kommunikationsverbindung mit dem Gerätesystem verbindbar ist, die Personensicherheit für den Bediener zu erhöhen.

Diese Aufgabe wird bei dem eingangs genannten Verfahren zur eindeutigen Zuordnung einer Fernbedienung zu einem Gerätesystem erfindungsgemäß durch die Merkmale des unabhängigen Anspruchs 1 gelöst und bei dem eingangs genannten Gerätesystem zur Durchführung eines derartigen Verfahrens zur eindeutigen Zuordnung durch die Merkmale des unabhängigen Anspruchs 13 gelöst. Vorteilhafte Weiterbildungen sind in den abhängigen Ansprüchen angegeben.

Erfindungsgemäß ist bei dem Verfahren zur eindeutigen Zuordnung einer als Fernbedienung ausgebildeten ersten Systemkomponente zu einer zweiten und dritten Systemkomponente des Gerätesystems vorgesehen, dass
▪ der zweite Identifikationscode von der zweiten Systemkomponente über eine zweite Kabel- oder Steckverbindung an die dritte Systemkomponente übermittelt wird und von der dritten Systemkomponente als zweiter Vergleichscode der dritten Systemkomponente gespeichert wird und
▪ ein dritter Identifikationscode der dritten Systemkomponente von der dritten Systemkomponente an die zweite Systemkomponente übermittelt wird und von der zweiten Systemkomponente als dritter Vergleichscode der zweiten Systemkomponente gespeichert wird.

Beim erfindungsgemäßen Verfahren werden die zweite und dritte Systemkomponente des Gerätesystems einander eindeutig zugeordnet. Jede Systemkomponente des Gerätesystems ist durch einen eindeutigen Identifikationscode gekennzeichnet, auch die Systemkomponenten, die nicht über eine draht- und kabellose Kommunikationsverbindung verbindbar sind. Das Gerätesystem weist mindestens drei Systemkomponenten, eine als Fernbedienung ausgebildete erste Systemkomponente, eine zweite Systemkomponente und eine dritte Systemkomponente.

Bevorzugt wird neben dem zweiten Identifikationscode der erste Identifikationscode der Fernbedienung von der zweiten Systemkomponente an die dritte Systemkomponente übermittelt und der erste Identifikationscode wird von der dritten Systemkomponente als erster Vergleichscode der dritten Systemkomponente gespeichert. Besonders bevorzugt wird neben dem zweiten Identifikationscode der dritte Identifikationscode der dritten Systemkomponente von der zweiten Systemkomponente an die Fernbedienung übermittelt und der dritte Identifikationscode wird von der Fernbedienung als dritter Vergleichscode der ersten Systemkomponente gespeichert.

Die Sicherheit beim Betrieb des Gerätesystems kann zusätzlich erhöht werden, wenn nicht nur die direkt miteinander verbundenen Systemkomponenten einander eindeutig zugeordnet werden, sondern alle Systemkomponenten des Gerätesystems einander eindeutig zugeordnet werden. Dazu erfolgt eine eindeutige Zuordnung zwischen der ersten und dritten Systemkomponente.

Bevorzugt ist vorgesehen, dass bei der Datenübertragung zwischen der ersten Systemkomponente und der zweiten Systemkomponente zumindest der Identifikationscode der sendenden Systemkomponente mit übertragen wird und der übertragene Identifikationscode von der empfangenden Systemkomponente mit dem, in der empfangenden Systemkomponente, gespeicherten Vergleichscode verglichen wird. Dadurch, dass der Identifikationscode der sendenden Systemkomponente bei der Datenübertragung mit übertragen, kann sichergestellt werden, dass Steuerbefehle, die übertragen werden, nur ausgeführt werden, wenn die Systemkomponenten einander eindeutig zugeordnet sind und der Identifikationscode fehlerfrei übertragen wurde.

In einer bevorzugten Weiterentwicklung wird bei der Datenübertragung zwischen der ersten und zweiten Systemkomponente neben dem Identifikationscode der sendenden Systemkomponente zusätzlich der, in der sendenden Systemkomponente, gespeicherte Vergleichscode der empfangenden Systemkomponente mit übertragen und der übertragene Identifikationscode wird von der empfangenden Systemkomponente mit dem, in der empfangenden Systemkomponente, gespeicherten eigenen Identifikationscode verglichen.

Das Gerätesystem wird in einen sicheren Zustand geschaltet, wenn die übertragenen Identifikationscodes von den gespeicherten Vergleichscodes abweichen. Die Ursache für die Abweichung zwischen den übertragenen Identifikationscodes und den gespeicherten Vergleichscodes spielt keine Rolle.

Bevorzugt ist vorgesehen, dass bei der Datenübertragung zwischen der zweiten Systemkomponente und der dritten Systemkomponente wird zumindest der Identifikationscode der sendenden Systemkomponente mit übertragen wird und der übertragene Identifikationscode wird von der empfangenden Systemkomponente mit dem, in der empfangenden Systemkomponente, gespeicherten Vergleichscode verglichen wird.

In einer bevorzugten Weiterentwicklung wird bei der Datenübertragung zwischen der zweiten und dritten Systemkomponente neben dem Identifikationscode der sendenden Systemkomponente zusätzlich der, in der sendenden Systemkomponente, gespeicherte Vergleichscode der empfangenden Systemkomponente mit übertragen wird und von der empfangenden Systemkomponente mit dem, in der empfangenden Systemkomponente, gespeicherten eigenen Identifikationscode verglichen.

Das Gerätesystem wird in einen sicheren Zustand geschaltet, wenn die übertragenen Identifikationscodes von den gespeicherten Vergleichscodes abweichen. Die Ursache für die Abweichung zwischen den übertragenen Identifikationscodes und den gespeicherten Vergleichscodes spielt keine Rolle.

In einer bevorzugten Weiterentwicklung des Verfahrens wird die dritte Systemkomponente über eine dritte Kabel- oder Steckverbindung mit einer vierten Systemkomponente des Gerätesystems verbunden, wobei ein vierter Identifikationscode von der vierten Systemkomponente an die dritte Systemkomponente übertragen und von der dritten Systemkomponente als vierter Vergleichscode der dritten Systemkomponente gespeichert wird und der dritte Identifikationscode der dritten Systemkomponente an die vierte Systemkomponente übertragen und von der vierten Systemkomponente als dritter Vergleichscode der vierten Systemkomponente gespeichert wird.

Besonders bevorzugt wird der vierte Identifikationscode von der dritten Systemkomponente an die zweite Systemkomponente übertragen und von der zweiten Systemkomponente als vierter Vergleichscode der zweiten Systemkomponente gespeichert und der vierte Identifikationscode wird anschließend von der zweiten Systemkomponente an die erste Systemkomponente übertragen und von der ersten Systemkomponente als vierter Vergleichscode der ersten Systemkomponente gespeichert. Besonders bevorzugt werden der erste und zweite Identifikationscode von der dritten Systemkomponente an die vierte Systemkomponente übertragen und die übertragenen Identifikationscodes werden von der vierten Systemkomponente als erster und zweiter Vergleichscode der vierten Systemkomponente gespeichert.

Das Gerätesystem weist in einer Weiterentwicklung vier Systemkomponenten auf, eine als Fernbedienung ausgebildete erste Systemkomponente, eine zweite Systemkomponente, eine dritte Systemkomponente und eine vierte Systemkomponente. Das Verfahren zur eindeutigen Zuordnung wird auf die vierte Systemkomponente übertragen. Die vierte Systemkomponente wird zunächst der direkt verbundenen dritten Systemkomponente eindeutig zugeordnet. Die Sicherheit beim Betrieb des Gerätesystems kann zusätzlich erhöht werden, wenn nicht nur die direkt miteinander verbundenen Systemkomponenten einander eindeutig zugeordnet werden, sondern alle Systemkomponenten des Gerätesystems einander eindeutig zugeordnet werden. Dazu erfolgt eine eindeutige Zuordnung zwischen der ersten und vierten Systemkomponente sowie zwischen der zweiten und vierten Systemkomponente.

Das Gerätesystem zur Durchführung eines Verfahrens zur eindeutigen Zuordnung ist dadurch gekennzeichnet, dass die Sicherheitseinheit zusätzlich die zweite Systemkomponente und die dritte Systemkomponente einander eindeutig zuordnet. Das Gerätesystem weist mindestens drei Systemkomponenten, eine als Fernbedienung ausgebildete erste Systemkomponente, eine zweite Systemkomponente und eine dritte Systemkomponente. Jede Systemkomponente des Gerätesystems ist durch einen eindeutigen Identifikationscode gekennzeichnet, auch die Systemkomponenten, die nicht über eine draht- und kabellose Kommunikationsverbindung verbindbar sind.

Bevorzugt ordnet die Sicherheitseinheit zusätzlich die Fernbedienung und die dritte Systemkomponente einander eindeutig zu. Die Sicherheit beim Betrieb des Gerätesystems kann zusätzlich erhöht werden, wenn nicht nur die direkt miteinander verbundenen Systemkomponenten (erste und zweite Systemkomponente sowie zweite und dritte Systemkomponente) einander eindeutig zugeordnet werden, sondern alle Systemkomponenten des Gerätesystems einander eindeutig zugeordnet werden. Dazu erfolgt eine eindeutige Zuordnung zwischen der ersten und dritten Systemkomponente.

In einer bevorzugten Ausführungsform weist die Sicherheitseinheit einen ersten, zweiten und dritten Transceiver sowie ein erstes, zweites und drittes Speicherelement auf, wobei der erste Transceiver und das erste Speicherelement in der Fernbedienung angeordnet sind, der zweite Transceiver und das zweite Speicherelement in der zweiten Systemkomponente angeordnet sind und der dritte Transceiver und das dritte Speicherelement in der dritten Systemkomponente angeordnet sind.

Besonders bevorzugt weisen das erste und dritte Speicherelement jeweils mindestens eine Speicherstelle und das zweite Speicherelement mindestens zwei Speicherstellen zum Speichern von Vergleichscodes auf, wobei das erste Speicherelement einen zweiten Vergleichscode der zweiten Systemkomponente speichert, das zweite Speicherelement einen ersten Vergleichscode der Fernbedienung und einen dritten Vergleichscode der dritten Systemkomponente speichert und das dritte Speicherelement einen zweiten Vergleichscode der zweiten Systemkomponente speichert.

Besonders bevorzugt weisen das erste und dritte Speicherelement jeweils mindestens zwei Speicherstellen zum Speichern von Vergleichscodes auf, wobei das erste Speicherelement zusätzlich einen dritten Vergleichscode der dritten Systemkomponente speichert und das dritte Speicherelement zusätzlich einen ersten Vergleichscode der Fernbedienung speichert.

In einer ersten bevorzugten Ausführung ist die dritte Systemkomponente als Werkzeuggerät mit einer Bearbeitungseinheit, die ein Bearbeitungswerkzeug und einen Antriebsmotor umfasst, und einer motorischen Vorschubeinheit, die einen Führungsschlitten und einen Vorschubmotor umfasst, ausgebildet und die zweite Systemkomponente ist als Elektronikaggregat mit einer Elektronikeinheit und einem Steuerelement für die Bearbeitungseinheit und einer Elektronikeinheit und einem Steuerelement für die motorische Vorschubeinheit ausgebildet.

In einer zweiten bevorzugten Ausführung ist die dritte Systemkomponente als Bearbeitungseinheit mit einem Bearbeitungswerkzeug, einem Antriebsmotor, einer dritten Elektronikeinheit und einer dritten Kontrolleinheit ausgebildet und die zweite Systemkomponente ist als motorische Vorschubeinheit mit einem Führungsschlitten, einem Vorschubmotor, einer zweiten Elektronikeinheit und einer zweiten Kontrolleinheit ausgebildet.

In einer dritten bevorzugten Ausführung weist das Gerätesystem eine vierte Systemkomponente auf, die über eine dritte Kabel- oder Steckverbindung mit der dritten Systemkomponente des Gerätesystems verbindbar, wobei die Sicherheitseinheit des Gerätesystems zusätzlich einen vierten Transceiver und ein viertes Speicherelement aufweist, die in der vierten Systemkomponente angeordnet sind.

Besonders bevorzugt ist die vierte Systemkomponente als Bearbeitungseinheit mit einem Bearbeitungswerkzeug und einem Antriebsmotor ausgebildet, die dritte Systemkomponente ist als motorische Vorschubeinheit mit einem Vorschubmotor ausgebildet und die zweite Systemkomponente ist als Elektronikaggregat mit einer Elektronikeinheit und einem Steuerelement für die Bearbeitungseinheit und einer Elektronikeinheit und einem Steuerelement für die motorische Vorschubeinheit ausgebildet.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erste Ausführungsform eines erfindungsgemäßen Gerätesystems, das als Wandsägesystem mit einer Fernbedienung, einem Elektronikaggregat und einer Wandsäge ausgebildet ist;
- FIGN. 2A, B: eine zweite Ausführungsform eines als Kernbohrsystem ausgebildeten erfindungsgemäßen Gerätesystems mit einer Fernbedienung, einer motorischen Vorschubeinheit und einem Bohrkopf (FIG. 2A) sowie den Aufbau des Bohrkopfes und der motorischen Vorschubeinheit in einer schematischen Darstellung (FIG. 2B);
- FIG. 3: eine dritte Ausführungsform eines erfindungsgemäßen Gerätesystems, das als Kernbohrsystem mit einer Fernbedienung, einem Elektronikaggregat, einer motorischen Vorschubeinheit und einem Bohrkopf ausgebildet ist;
- FIG. 4: das Gerätesystem der FIG. 1 mit einer Sicherheitseinheit, die eine eindeutige Zuordnung der Systemkomponenten durchführt;
- FIGN. 5A, B: den Ablauf des erfindungsgemäßen Verfahrens zur eindeutigen Zuordnung mit Hilfe der Sicherheitseinheit; und
- FIG. 6: eine vierte Ausführungsform eines erfindungsgemäßen Gerätesystems, das als Kernbohrsystem mit einer Fernbedienung, einem ersten Elektronikaggregat, einer motorischen Vorschubeinheit, einem zweiten Elektronikaggregat und einem Bohrkopf ausgebildet ist.

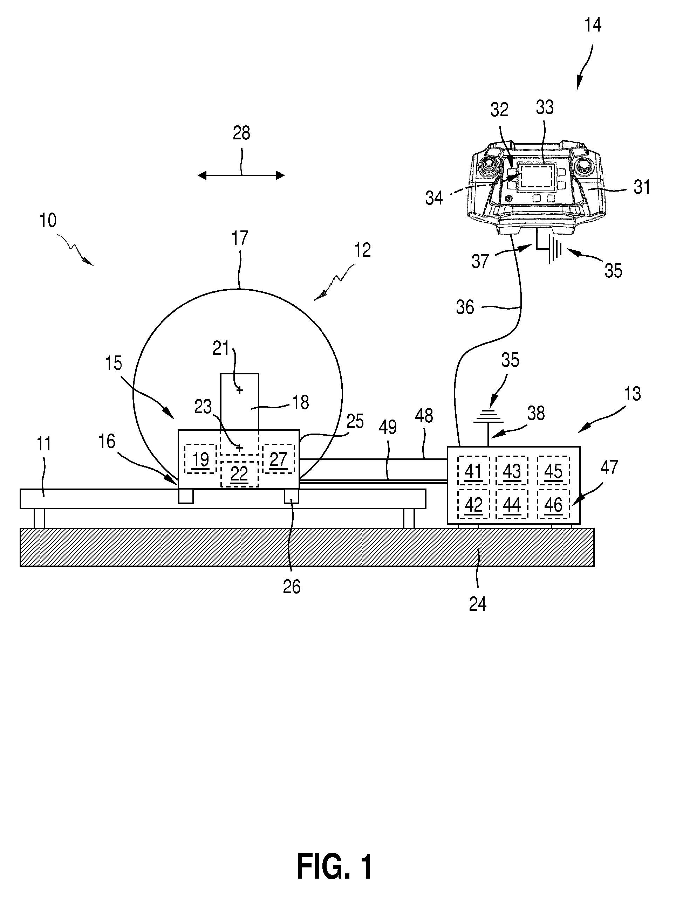

**FIG. 1** zeigt eine erste Ausführungsform eines erfindungsgemäßen Gerätesystems **10,** das als Wandsägesystem mit drei Systemkomponenten, die einander eindeutig zugeordnet werden, ausgebildet ist. Das Wandsägesystem 10 umfasst eine Führungsschiene **11,** ein an der Führungsschiene 11 verschiebbar angeordnetes Werkzeuggerät **12,** ein Elektronikaggregat **13** und eine Fernbedienung **14.** Für das erfindungsgemäße Verfahren zur eindeutigen Zuordnung bilden die Fernbedienung 14 die erste Systemkomponente, das Elektronikaggregat 13 die zweite Systemkomponente und das Werkzeuggerät 12 die dritte Systemkomponente des Wandsägesystems 10.

Das Werkzeuggerät ist als Wandsäge 12 ausgebildet und umfasst eine als Sägekopf **15** ausgebildete Bearbeitungseinheit und eine motorische Vorschubeinheit **16.** Der Sägekopf 15 umfasst ein als Sägeblatt **17** ausgebildetes Bearbeitungswerkzeug, das an einem Sägearm **18** befestigt ist und von einem Antriebsmotor **19** um eine Drehachse **21** angetrieben wird. Zum Schutz des Bedieners kann das Sägeblatt 17 von einem Sägeblattschutz umgeben sein, der mittels eines Blattschutzhalters am Sägearm 18 befestigt wird. Der Sägearm 18 ist von einem Schwenkmotor **22** um eine Schwenkachse **23** schwenkbar ausgebildet. Der Schwenkwinkel des Sägearms 18 bestimmt mit dem Sägeblattdurchmesser des Sägeblattes 17, wie tief das Sägeblatt 17 in ein zu bearbeitendes Werkstück **24** eintaucht. Der Antriebsmotor 19 und der Schwenkmotor 22 sind in einem Gerätegehäuse **25** angeordnet. Die motorische Vorschubeinheit 16 umfasst einen Führungsschlitten **26** und einen Vorschubmotor **27,** der ebenfalls im Gerätegehäuse 25 angeordnet ist. Der Sägekopf 15 ist auf dem Führungsschlitten 26 befestigt und über den Vorschubmotor 27 entlang der Führungsschiene 11 parallel zu einer Vorschubrichtung **28** (Doppelpfeil) verschiebbar ausgebildet.

Die Fernbedienung 14 umfasst ein Gerätegehäuse **31,** eine Eingabeeinrichtung **32,** eine Anzeigeeinrichtung **33** und eine erste Kontrolleinheit **34,** die im Inneren des Gerätegehäuses 31 angeordnet ist. Die erste Kontrolleinheit 34 wandelt die Eingaben über die Eingabeeinrichtung 32 in Steuerbefehle und Daten um, die über eine erste Kommunikationsverbindung an das Elektronikaggregat 13 übermittelt werden. Die erste Kommunikationsverbindung ist wahlweise als draht- und kabellose Kommunikationsverbindung **35** oder als erste Kabelverbindung **36** ausgebildet. Die erste Kabelverbindung 36 wird vor allem eingesetzt, wenn eine draht- und kabellose Kommunikation aus Sicherheitsgründen untersagt ist, wie beispielsweise in Krankenhäusern und auf Flughäfen, oder wenn Störquellen die draht- und kabellose Kommunikation behindern. Außerdem wird die erste Kabelverbindung 36 genutzt, um die Fernbedienung 14, das Elektronikaggregat 13 und die Wandsäge 12 mit Hilfe des erfindungsgemäßen Verfahrens zur eindeutigen Zuordnung einander eindeutig zuzuordnen. Die draht- und kabellose Kommunikationsverbindung ist im Ausführungsbeispiel als Funkverbindung 35 ausgebildet, die zwischen einer ersten Funkeinheit **37** an der Fernbedienung 14 und einer zweiten Funkeinheit **38** am Werkzeuggerät 12 entsteht. Alternativ kann die draht- und kabellose Kommunikationsverbindung 35 in Form einer Infrarot-, Bluetooth-, WLAN- oder Wi-Fi-Verbindung ausgebildet sein; neben den aufgeführten, draht- und kabellosen Verbindungstechnologien eignen sich sämtliche bereits bekannten und zukünftigen draht- und kabellosen Verbindungstechnologien zur Datenübertragung.

Das Elektronikaggregat 13 umfasst eine erste Elektronikeinheit **41,** die den Antriebsmotor 19 elektrisch versorgt, und ein erstes Steuerelement **42,** das den Antriebsmotor 19 steuert, eine zweite Elektronikeinheit **43,** die den Schwenkmotor 22 elektrisch versorgt, und ein zweites Steuerelement **44,** das den Schwenkmotor 22 steuert, sowie eine dritte Elektronikeinheit **45,** die den Vorschubmotor 27 elektrisch versorgt, und ein drittes Steuerelement **46,** das den Vorschubmotor 27 steuert. Das erste, zweite und dritte Steuerelement 42, 44, 46 bilden gemeinsam eine zweite Kontrolleinheit **47.** Das Elektronikaggregat 13 ist über eine zweite Kommunikationsverbindung **48** mit der Wandsäge 12 verbunden. Die zweite Kommunikationsverbindung ist im Ausführungsbeispiel als zweite Kabelverbindung 48 ausgebildet. Die elektrischen Versorgungsleitungen zwischen dem Elektronikaggregat 13 und der Wandsäge 12 sind in einem separaten Versorgungskabel **49** untergebracht. Alternativ können die Daten- und Steuerleitungen der zweiten Kommunikationsverbindung und die elektrischen Versorgungsleitungen des Versorgungskabels in einem gemeinsamen Verbindungskabel integriert sein.

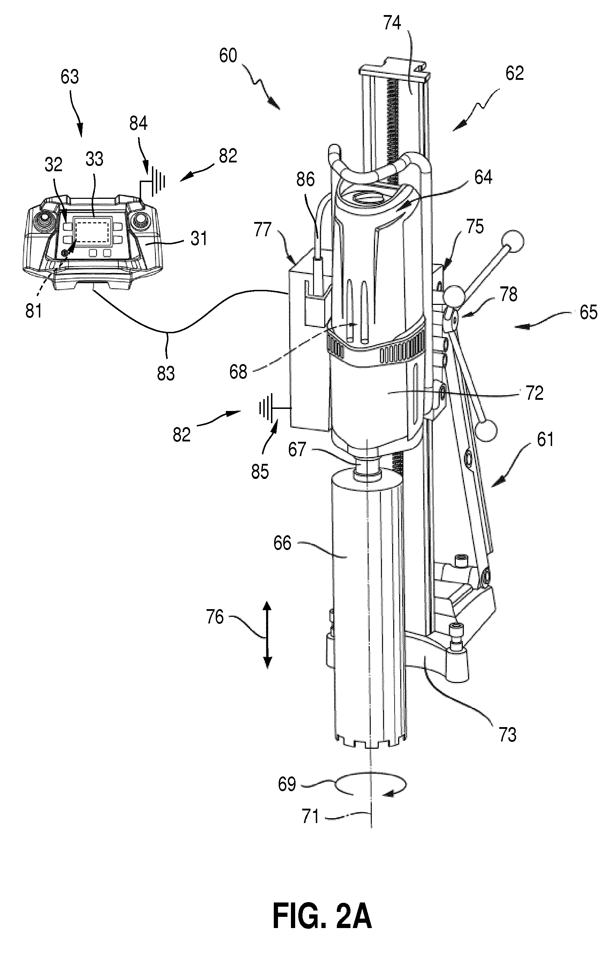

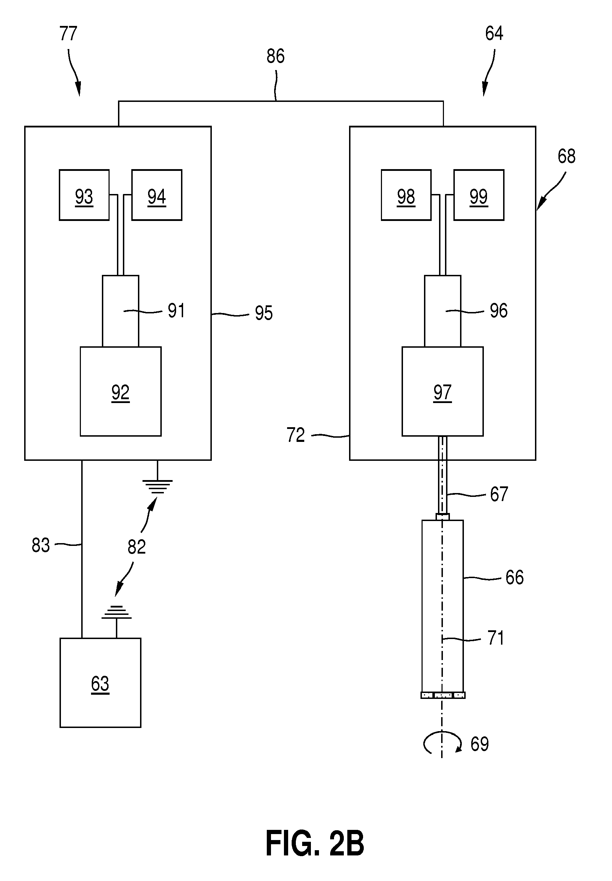

**FIGN. 2A****, B** zeigen eine zweite Ausführungsform eines erfindungsgemäßen Gerätesystems **60,** das als Kernbohrsystem ausgebildet ist. Das Kernbohrsystem 60 umfasst einen Geräteständer **61,** ein am Geräteständer 61 verschiebbar angeordnetes Werkzeuggerät **62** und eine Fernbedienung **63.** Das Werkzeuggerät ist als Kernbohrgerät 62 ausgebildet und umfasst eine Bearbeitungseinheit **64** und eine Vorschubvorrichtung **65.**

Die Bearbeitungseinheit ist als Bohrkopf 64 ausgebildet und umfasst ein als Bohrkrone **66** ausgebildetes Bearbeitungswerkzeug, das auf einer Antriebswelle **67** angeordnet ist und von einer Antriebseinrichtung **68** in einer Drehrichtung **69** um eine Drehachse **71** angetrieben wird. Unter dem Begriff "Antriebseinrichtung" werden sämtliche Antriebskomponenten für die Bohrkrone 66, mit Ausnahme der Antriebswelle 67, zusammengefasst. Die Antriebseinrichtung 68 ist in einem Gerätegehäuse **72** des Bohrkopfes 64 angeordnet.

Der Geräteständer 61 besteht aus einer Grundplatte **73,** die an einem Untergrund befestigt wird, und einer Führungsschiene **74,** die mit der Grundplatte 73 verbunden ist. Der Bohrkopf 64 ist über einen Führungsschlitten **75** am Geräteständer 61 angeordnet und mittels der Vorschubvorrichtung 65 entlang der Führungsschiene 74 parallel zu einer Vorschubrichtung **76,** die parallel zur Drehachse 71 verläuft, verschiebbar. Die Vorschubvorrichtung 65 umfasst eine motorische Vorschubeinheit **77** und eine, als Handrad ausgebildete, manuelle Vorschubeinheit **78.** Der Bohrkopf 64 kann wahlweise mit der motorischen Vorschubeinheit 77 oder der manuellen Vorschubeinheit 78 entlang der Führungsschiene 74 des Geräteständers 61 verfahren werden.

Die Fernbedienung 63 des Kernbohrsystems 60 ist analog zur Fernbedienung 14 des Wandsägesystems 10 aus dem Gerätegehäuse 31, der Eingabeeinrichtung 32, der Anzeigeeinrichtung 33 und einer ersten Kontrolleinheit **81** aufgebaut. Die erste Kontrolleinheit 81 der Fernbedienung 63 ist über eine erste Kommunikationsverbindung mit dem Bohrkopf 64 verbunden. Die erste Kommunikationsverbindung ist wahlweise als draht- und kabellose Kommunikationsverbindung **82** oder als erste Kabelverbindung **83** ausgebildet. Die draht- und kabellose Kommunikationsverbindung ist im Ausführungsbeispiel als Funkverbindung 82 ausgebildet, die zwischen einer ersten Funkeinheit **84** an der Fernbedienung 63 und einer zweiten Funkeinheit **85** an der motorischen Vorschubeinheit 77 entsteht.

Die motorische Vorschubeinheit 77 ist über eine zweite Kommunikationsverbindung **86** mit dem Bohrkopf 64 verbunden, wobei die zweite Kommunikationsverbindung im Ausführungsbeispiel als zweite Kabelverbindung 86 ausgebildet ist. Im Ausführungsbeispiel der FIG. 2A verbindet die erste Kommunikationsverbindung 82, 83 die Fernbedienung 63 mit der motorischen Vorschubeinheit 77, die ihrerseits über die zweite Kabelverbindung 86 mit dem Bohrkopf 64 verbunden ist. Alternativ kann die Fernbedienung 63 mit dem Bohrkopf 64 und der Bohrkopf 64 mit der motorischen Vorschubeinheit 77 verbunden werden.

FIG. 2B zeigt den Aufbau der Antriebseinrichtung 68 des Bohrkopfes 64 und der motorischen Vorschubeinheit 77 des Kernbohrsystems 60 in einer schematischen Darstellung. Die motorische Vorschubeinheit 77 verfährt den Bohrkopf 64 in der Vorschubrichtung 76 entlang der Führungsschiene 74. Die Bohrkrone 66 ist drehfest auf der Antriebswelle 67 montiert und wird von der Antriebseinrichtung 68 um die Drehachse 72 angetrieben.

Die motorische Vorschubeinheit 77 umfasst einen Vorschubmotor **91,** eine Getriebeeinrichtung **92,** eine Elektronikeinheit **93** zur elektrischen Versorgung des Vorschubmotors 91 und eine Kontrolleinheit **94** zur Steuerung des Vorschubmotors 91. Der Vorschubmotor 91, die Getriebeeinrichtung 92, die Elektronikeinheit 93 und die Kontrolleinheit 94 sind in einem Gerätegehäuse **95** der motorischen Vorschubeinheit 77 angeordnet.

Die Antriebseinrichtung 68 umfasst einen Antriebsmotor **96,** eine weitere Getriebeeinrichtung **97,** eine weitere Elektronikeinheit **98** zur elektrischen Versorgung des Antriebsmotors 96 und eine weitere Kontrolleinheit **99** zur Steuerung des Antriebsmotors 96. Die Antriebswelle 67 wird vom Antriebsmotor 96 und der weiteren Getriebeeinrichtung 97 um die Drehachse 71 angetrieben, wobei die weitere Getriebeeinrichtung 97 zwischen dem Antriebsmotor 96 und der Antriebswelle 67 angeordnet ist. Der Antriebsmotor 96, die weitere Getriebeeinrichtung 97, die weitere Elektronikeinheit 98 und die weitere Kontrolleinheit 99 sind im Gerätegehäuse 72 des Bohrkopfes 64 angeordnet.

Für das erfindungsgemäße Verfahren zur eindeutigen Zuordnung bilden die Fernbedienung 63 die erste Systemkomponente, die motorische Vorschubeinheit 77 die zweite Systemkomponente und der Bohrkopf 64 die dritte Systemkomponente des Kernbohrsystems 60. Jede Systemkomponente 63, 77, 64 des Kernbohrsystems 60 weist eine Kontrolleinheit und ein Gerätegehäuse auf. Zur Unterscheidung der Kontrolleinheiten der Fernbedienung 63, der motorischen Vorschubeinheit 77 und des Bohrkopfes 64 werden die Kontrolleinheit 71 der Fernbedienung 63 als erste Kontrolleinheit, die Kontrolleinheit 94 der motorischen Vorschubeinheit 77 als zweite Kontrolleinheit und die Kontrolleinheit 99 des Bohrkopfes 64 als dritte Kontrolleinheit bezeichnet. Außerdem werden das Gerätegehäuse 31 der Fernbedienung 63 als erstes Gerätegehäuse, das Gerätegehäuse 95 der motorischen Vorschubeinheit 77 als zweites Gerätegehäuse und das Gerätegehäuse 72 des Bohrkopfes 64 als drittes Gerätegehäuse bezeichnet.

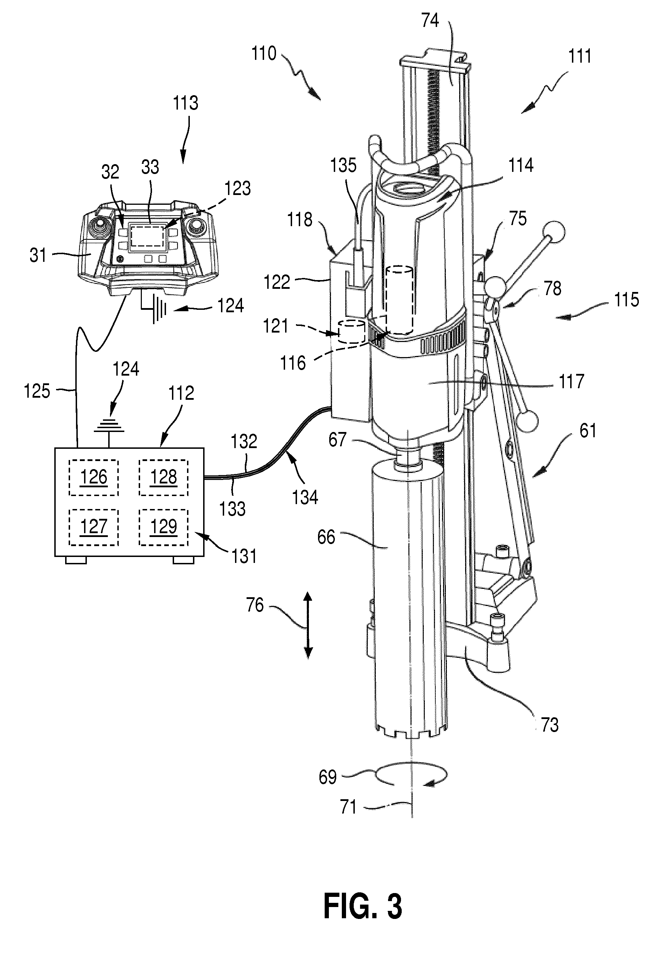

**FIG. 3** zeigt eine dritte Ausführungsform eines erfindungsgemäßen Gerätesystems **110,** das als Kernbohrsystem ausgebildet ist. Das Kernbohrsystem 110 umfasst den Geräteständer 61, ein am Geräteständer 61 verschiebbar angeordnetes Werkzeuggerät **111,** ein Elektronikaggregat **112** und eine Fernbedienung **113.** Das Werkzeuggerät ist als Kernbohrgerät 111 ausgebildet und umfasst eine Bearbeitungseinheit **114** und eine Vorschubvorrichtung **115.**

Die Bearbeitungseinheit ist als Bohrkopf 111 ausgebildet und umfasst das als Bohrkrone 66 ausgebildete Bearbeitungswerkzeug, das auf der Antriebswelle 67 angeordnet ist und von einem Antriebsmotor **116** in der Drehrichtung 69 um eine Drehachse 71 angetrieben wird. Der in FIG. 1 schematisch dargestellte Antriebsmotor 116 ist einem Gerätegehäuse **117** angeordnet; sämtliche Elektronikkomponenten zur Versorgung und Steuerung des Antriebsmotors 116 sind im Elektronikaggregat 112 untergebracht. Die Bohrkrone 66 ist drehfest auf der Antriebswelle 67 montiert und die Antriebswelle 67 wird vom Antriebsmotor 116 um die Drehachse 71 angetrieben. Zwischen dem Antriebsmotor 116 und der Antriebswelle 67 können eine oder mehrere Getriebekomponenten zwischengeschaltet sein.

Der Bohrkopf 114 ist über den Führungsschlitten 75 am Geräteständer 61 angeordnet und mittels der Vorschubvorrichtung 115 entlang der Führungsschiene 74 in der Vorschubrichtung 76 verschiebbar. Die Vorschubvorrichtung 115 umfasst eine motorische Vorschubeinheit **118** und die, als Handrad ausgebildete, manuelle Vorschubeinheit 78. Der Bohrkopf 114 kann wahlweise mit der motorischen Vorschubeinheit 118 oder der manuellen Vorschubeinheit 78 entlang der Führungsschiene 74 verfahren werden. Die motorische Vorschubeinheit 118 umfasst einen Vorschubmotor **121,** der in einem Gerätegehäuse **122** angeordnet ist; sämtliche Elektronikkomponenten zur Steuerung und Versorgung des Vorschubmotors 121 sind im Elektronikaggregat 112 untergebracht.

Die Fernbedienung 113 des Kernbohrsystems 110 ist analog zu den Fernbedienungen 14, 63 des Wandsägesystems 10 der FIG. 1 und des Kernbohrsystems 60 der FIG. 2 aus dem Gerätegehäuse 31, der Eingabeeinrichtung 32, der Anzeigeeinrichtung 33 und einer ersten Kontrolleinheit **123** aufgebaut. Die Fernbedienung 113 ist über eine erste Kommunikationsverbindung mit dem Elektronikaggregat 112 verbunden. Die erste Kommunikationsverbindung ist wahlweise als draht- und kabellose Kommunikationsverbindung **124** oder als erste Kabelverbindung **125** ausgebildet.

Das Elektronikaggregat 112 umfasst eine erste Elektronikeinheit **126,** die den Antriebsmotor 116 elektrisch versorgt, und ein erstes Steuerelement **127,** das den Antriebsmotor 116 steuert, sowie eine zweite Elektronikeinheit **128,** die den Vorschubmotor 121 elektrisch versorgt, und ein zweites Steuerelement **129,** das den Vorschubmotor 121 steuert. Das erste und zweite Steuerelement 127, 129 bilden gemeinsam eine zweite Kontrolleinheit **131.** Das Elektronikaggregat 112 ist über eine zweite Kommunikationsverbindung mit der motorischen Vorschubeinheit 118 verbunden. Dabei ist die zweite Kommunikationsverbindung im Ausführungsbeispiel als zweite Kabelverbindung **132** ausgebildet, die mit elektrischen Versorgungsleitungen **133** in ein Verbindungskabel **134** integriert ist. Die motorische Vorschubeinheit 118 ist über eine dritte Kommunikationsverbindung mit dem Bohrkopf 114 verbunden. Die dritte Kommunikationsverbindung ist im Ausführungsbeispiel als dritte Kabelverbindung **135** ausgebildet.

Für das erfindungsgemäße Verfahren zur eindeutigen Zuordnung bilden die Fernbedienung 113 die erste Systemkomponente, das Elektronikaggregat 112 die zweite Systemkomponente, die motorische Vorschubeinheit 118 die dritte Systemkomponente und der Bohrkopf 114 die vierte Systemkomponente des Kernbohrsystems 110.

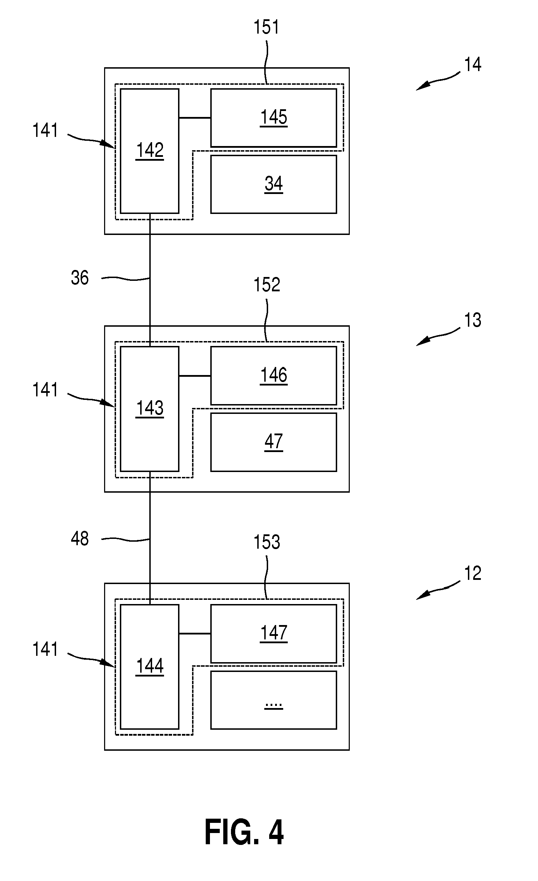

**FIG. 4** zeigt das Zusammenwirken der Fernbedienung 14, des Elektronikaggregates 13 und des Werkzeuggerätes 12 bei der eindeutigen Zuordnung der Systemkomponenten 14, 13, 12 des Gerätesystems 10 der FIG. 1. Das erfindungsgemäße Verfahren zur eindeutigen Zuordnung wird nur ausgeführt, wenn die Fernbedienung 14 über die erste Kabelverbindung 36 mit dem Elektronikaggregat 13 verbunden ist und das Elektronikaggregat 13 über die zweite Kabelverbindung 48 mit dem Werkzeuggerät 12 verbunden ist.

Die eindeutige Zuordnung der drei Systemkomponenten 14, 13, 12 des Gerätesystems 10 erfolgt mittels einer Sicherheitseinheit **141.** Die Fernbedienung 14 stellt die erste Systemkomponente, das Elektronikaggregat 13 die zweite Systemkomponente und das Werkzeuggerät 12 die dritte Systemkomponente des Gerätesystems 10 dar. Jede Systemkomponente 14, 13, 12 ist durch einen eindeutigen Identifikationscode gekennzeichnet, die Fernbedienung 14 durch einen ersten Identifikationscode **ID-1,** das Elektronikaggregat 13 durch einen zweiten Identifikationscode **ID-2** und das Werkzeuggerät 12 durch einen dritten Identifikationscode **ID-3.**

Die Sicherheitseinheit 141 umfasst einen ersten Transceiver **142,** einen zweiten Transceiver **143** und einen dritten Transceiver **144** sowie ein erstes Speicherelement **145,** ein zweites Speicherelement **146** und ein drittes Speicherelement **147.** Der erste Transceiver 142 und das erste Speicherelement 145 sind in der Fernbedienung 14 angeordnet und bilden ein erstes Teil **151** der Sicherheitseinheit 141, der zweite Transceiver 143 und das zweite Speicherelement 146 sind im Elektronikaggregat 13 angeordnet und bilden ein zweites Teil **152** der Sicherheitseinheit 141 und der dritte Transceiver 144 und das dritte Speicherelement 147 sind im Werkzeuggerät 12 angeordnet und bilden ein drittes Teil **153** der Sicherheitseinheit 141. Das erste, zweite und dritte Teil 151, 152, 153 bilden gemeinsam die Sicherheitseinheit 141.

In jedem Speicherelement werden zumindest die Identifikationscodes der direkt verbundenen Systemkomponenten als Vergleichscodes **VCᵢ-j** gespeichert. Die Vergleichscodes VCᵢ-j weisen zwei Indices auf, wobei der erste Index i, i = 1 bis 3 die speichernde Systemkomponente und der zweite Index j, j = 1 bis 3 die empfangende Systemkomponente kennzeichnet. Die Fernbedienung 14 ist über die erste Kabelverbindung 36 direkt mit dem Elektronikaggregat 13 verbunden und speichert zumindest den zweiten Identifikationscode ID-2 des Elektronikaggregates 13 als zweiten Vergleichscode **VC₁-2**. Die Wandsäge 12 ist über die zweite Kabelverbindung 48 direkt mit dem Elektronikaggregat 13 verbunden und speichert zumindest den zweiten Identifikationscode ID-2 des Elektronikaggregates 13 als zweiten Vergleichscode **VC₃-2.** Das Elektronikaggregat 13 ist direkt mit der Fernbedienung 14 und der Wandsäge 12 verbunden und speichert daher den ersten Identifikationscode ID-1 der Fernbedienung 14 als ersten Vergleichscode **VC₂**-**1** und den dritten Identifikationscode ID-3 der Wandsäge 12 als dritten Vergleichscode **VC₂-3.**

In einer Weiterentwicklung speichern die Systemkomponenten 14, 13, 12 nicht nur die Identifikationscodes der direkt verbundenen Systemkomponenten als Vergleichscodes, sondern die Identifikationscodes aller Systemkomponenten 14, 13, 12 des Gerätesystems 10 werden als Vergleichscodes gespeichert. Die Speicherelemente 145, 146, 147 weisen im Ausführungsbeispiel jeweils drei Speicherstellen zum Speichern von Identifikationscodes auf. Im ersten Speicherelement 145 wird neben dem zweiten Vergleichscode VC₁-2 der Fernbedienung 14 der dritte Identifikationscode ID-3 des Werkzeuggerätes 12 als dritter Vergleichscode **VC₁-3** der Fernbedienung 14 gespeichert und im dritten Speicherelement 147 wird neben dem zweiten Vergleichscode VC₃-2 des Werkzeuggerätes 12 der erste Identifikations-code ID-1 der Fernbedienung 14 als erster Vergleichscode **VC₃-1** des Werkzeuggerätes 12 gespeichert. Der eigene Identifikationscode ID-1, ID-2, ID-3 einer Systemkomponente 14, 13, 12 kann wie im Ausführungsbeispiel in einer weiteren Speicherstelle des eigenen Speicherelementes 145, 146, 147 gespeichert sein oder an einer anderen Stelle in der Kontrolleinheit.

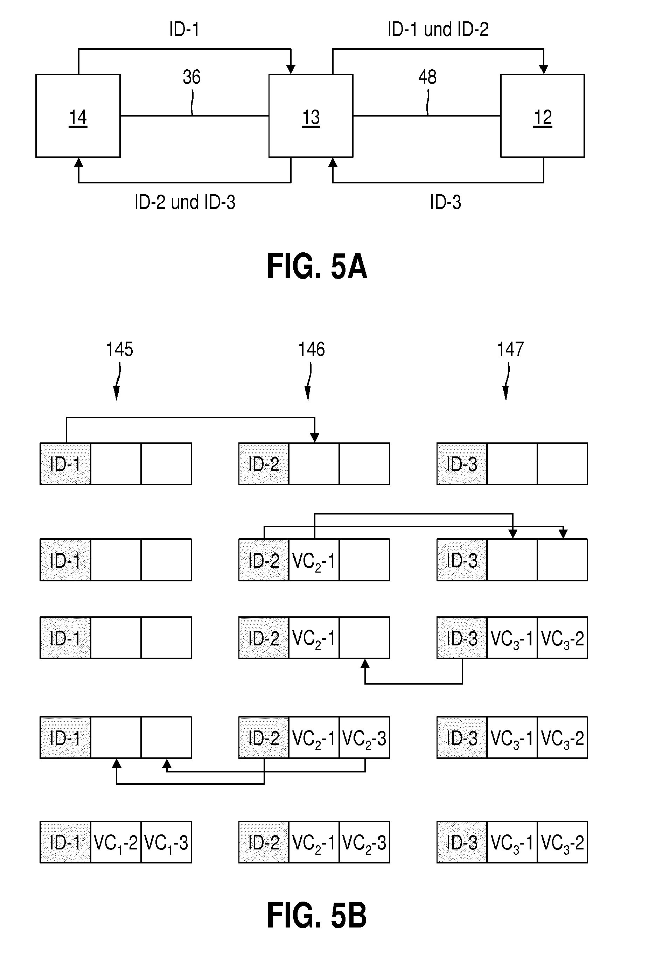

**FIGN. 5A****, B** zeigen den Ablauf der einzelnen Verfahrensschritte des erfindungsgemäßen Verfahrens zur eindeutigen Zuordnung der Fernbedienung 14, des Elektronikaggregates 13 und des Werkzeuggerätes 12. FIG. 5A zeigt das Zusammenspiel der drei Systemkomponenten 14, 13, 12 und FIG. 5B die Speicherelemente 145, 146, 147 der drei Systemkomponenten 14, 13, 12. Dabei zeigt FIG. 5B eine Ausführungsform der Sicherheitseinheit 141, bei der die Systemkomponenten 14, 13, 12 alle Identifikationscodes der Systemkomponenten 14, 13, 12 des Gerätesystems 10 speichern und die eigenen Identifikationscodes der Systemkomponenten 14, 13, 12 in den Speicherelementen 145, 146, 147 gespeichert sind. Die Fernbedienung 14 ist über die erste Kabelverbindung 36 mit dem Elektronikaggregat 13 verbunden und das Elektronikaggregat 13 ist über die zweite Kabelverbindung 48 mit dem Werkzeuggerät 12 verbunden. Zwischen der Fernbedienung 14 und dem Werkzeuggerät 12 besteht keine direkte Kommunikationsverbindung, die Kommunikation erfolgt über das Elektronikaggregat 13.

Der erste Transceiver 142 übermittelt den ersten Identifikationscode ID-1 der Fernbedienung 14 über die erste Kabelverbindung 36 an den zweiten Transceiver 143, der den ersten Identifikationscode ID-1 als ersten Vergleichscode VC₂-1 im zweiten Speicherelement 146 speichert. Der zweite Transceiver 143 übermittelt den ersten Identifikationscode ID-1 der Fernbedienung 14 und den eigenen, zweiten Identifikationscode ID-2 des Elektronikaggregates 13 über die zweite Kabelverbindung 48 an den dritten Transceiver 144, der den ersten Identifikationscode ID-1 als ersten Vergleichscode VC₃-1 der dritten Systemkomponente und den zweiten Identifikationscode ID-2 als zweiten Vergleichscode VC₃-2 der dritten Systemkomponente im dritten Speicherelement 147 speichert. Der dritte Transceiver 144 übermittelt den dritten Identifikationscode ID-3 des Werkzeuggerätes 12 über die zweite Kabelverbindung 48 an den zweiten Transceiver 143, der den dritten Identifikationscode ID-3 als dritten Vergleichscode VC₂-3 der zweiten Systemkomponente im zweiten Speicherelement 146 speichert. Der zweite Transceiver 143 übermittelt den zweiten Identifikationscode ID-2 des Elektronikaggregates 13 und den dritten Identifikationscode ID-3 des Werkzeuggerätes 12 über die erste Kabelverbindung 36 an den ersten Transceiver 142, der den zweiten Identifikationscode ID-2 als zweiten Vergleichscode VC₁-2 der ersten Systemkomponente und den dritten Identifikationscode ID-3 als dritten Vergleichscode VC₁-3 der ersten Systemkomponente im ersten Speicherelement 145 speichert.

Nach Abschluss des erfindungsgemäßen Verfahrens sind in jedem Speicherelement 145, 146, 147 die Identifikationscodes der Systemkomponenten 14, 13, 12 des Gerätesystems 10 gespeichert. Um sicherzustellen, dass während des Betriebs nur die einander eindeutig zugeordneten Systemkomponenten 14, 13, 12 miteinander kommunizieren, werden bei der Datenübertragung die Identifikationscodes regelmäßig übertragen und von den Transceivern 142, 143, 144 der Systemkomponenten mit den gespeicherten Vergleichscodes verglichen. Steuerbefehle und Daten, die beispielsweise von der Fernbedienung 14 über die erste Kommunikationsverbindung 35 übertragen werden, werden nur ausgeführt, wenn der von der Fernbedienung 14 übertragene erste Identifikationscode ID-1 mit dem, im zweiten Speicherelement 146 gespeicherten, ersten Vergleichscode VC₂-1 der zweiten Systemkomponente übereinstimmt.

In einer Weiterentwicklung des erfindungsgemäßen Verfahrens werden nicht nur die Identifikationscodes der Systemkomponenten 14, 13, 12 des Gerätesystems 10 übertragen, sondern zusätzlich werden weitere Informationen über die Systemkomponenten des Gerätesystems 10 übertragen. Zu diesen weiteren Informationen gehören beispielsweise Gerätetypen und gerätespezifische Kenngrößen. Wenn eine Fernbedienung 14 verschiedene Werkzeuggeräte bedienen kann, müssen verschiedene Steuerungsverfahren in der Kontrolleinheit der Fernbedienung gespeichert sein. In der Praxis ist es üblich, dass eine Fernbedienung beispielsweise eine Diamantwandsäge und eine Diamantseilsäge steuern kann. Für eine gesteuerte Bearbeitung sind gerätespezifische Kenngrößen erforderlich, die der Fernbedienung übermittelt werden müssen. Die Eingabe dieser Kenngrößen kann vom Bediener vorgenommen werden oder die Kenngrößen können in der Kontrolleinheit jeder Systemkomponente gespeichert und bei der Zuordnung der Systemkomponenten übertragen werden. Wenn die Fernbedienung 14 mit einer Wandsäge 12 verbunden wird, werden in der Fernbedienung 14 nur die Steuerungsverfahren angezeigt, die für den vorliegenden Gerätetyp der Wandsäge 12 geeignet sind. Dem Bediener werden keine Steuerungsverfahren angezeigt, die für die Wandsäge 12 ungeeignet sind.

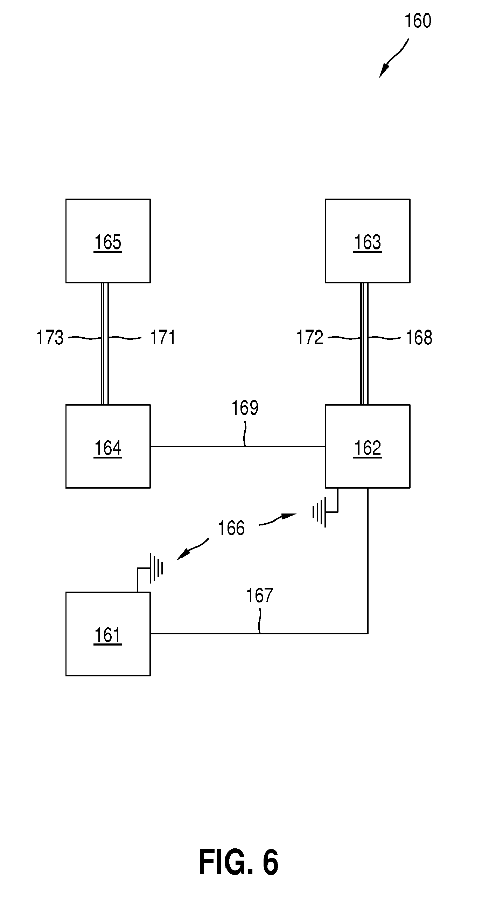

**FIG. 6** zeigt eine vierte Ausführungsform eines erfindungsgemäßen Gerätesystems, das als Kernbohrsystem **160** mit fünf Systemkomponenten ausgebildet und in Form eines Blockdiagramms dargestellt ist. Das Kernbohrsystem 160 umfasst eine Fernbedienung **161,** ein erstes Elektronikaggregat **162,** eine motorische Vorschubeinheit **163,** ein zweites Elektronikaggregat **164** und eine als Bohrkopf **165** ausgebildete Bearbeitungseinheit. Für das erfindungsgemäße Verfahren zur eindeutigen Zuordnung der Systemkomponenten bilden die Fernbedienung 161 die erste Systemkomponente, das erste Elektronikaggregat 162 die zweite Systemkomponente, die motorische Vorschubeinheit 163 die dritte Systemkomponente, das zweite Elektronikaggregat 164 die vierte Systemkomponente und der Bohrkopf 165 die fünfte Systemkomponente des Kernbohrsystems 160. Jede der fünf Systemkomponenten 161-165 des Gerätesystems 160 ist durch einen eindeutigen Identifikationscode gekennzeichnet.

Die motorische Vorschubeinheit 163 und der Bohrkopf 165 des Kernbohrsystems 160 entsprechen im Aufbau den Systemkomponenten des Kernbohrsystems 110 der FIG. 3, die motorische Vorschubeinheit 163 entspricht der motorischen Vorschubeinheit 118 mit dem Vorschubmotor 121 und der Bohrkopf 165 entspricht dem Bohrkopf 114 mit dem Antriebsmotor 116. Die Elektronikkomponenten 126, 127 zur Versorgung und Steuerung der motorischen Vorschubeinheit 163 sind im ersten Elektronikaggregat 162 angeordnet und die Elektronikkomponenten 128, 129 zur Versorgung und Steuerung des Bohrkopfes 165 sind im zweiten Elektronikaggregat 164 angeordnet.

Die Fernbedienung 161 ist über eine erste Kommunikationsverbindung mit dem ersten Elektronikaggregat 162 verbunden, wobei die erste Kommunikationsverbindung als draht- und kabellose Kommunikationsverbindung **166** oder als erste Kabelverbindung **167** ausgebildet ist. Das erste Elektronikaggregat 162 ist über eine zweite Kommunikationsverbindung **168** mit der motorischen Vorschubeinheit 163 und über eine dritte Kommunikationsverbindung **169** mit dem zweiten Elektronikaggregat 164 verbunden. Die zweite Kommunikationsverbindung ist als zweite Kabelverbindung 168 ausgebildet und die dritte Kommunikationsverbindung als dritte Kabelverbindung 169. Das zweite Elektronikaggregat 164 ist über eine vierte Kommunikationsverbindung, die als vierte Kabelverbindung **171** ausgebildet ist, mit dem Bohrkopf 165 verbunden.

Die elektrische Versorgung der motorischen Vorschubeinheit 163 erfolgt über ein erstes Versorgungskabel **172**, das das erste Elektronikaggregat 162 mit der motorischen Vorschubeinheit 163 verbindet. Dabei können die zweite Kabelverbindung 168 und das erste Versorgungskabel 172, wie in FIG. 6 dargestellt, als separate Kabel ausgebildet sein oder alternativ in ein gemeinsames erstes Verbindungskabel integriert werden. Die elektrische Versorgung des Bohrkopfes 165 erfolgt über ein zweites Versorgungskabel **173,** das das zweite Elektronikaggregat 164 mit dem Bohrkopf 165 verbindet. Dabei können die vierte Kabelverbindung 171 und das zweite Versorgungskabel 173, wie in FIG. 6 dargestellt, als separate Kabel ausgebildet sein oder alternativ in ein gemeinsames zweites Verbindungskabel integriert werden.

## Patentansprüche

1. Verfahren zur eindeutigen Zuordnung einer als Fernbedienung (14; 63; 113; 161) ausgebildeten ersten Systemkomponente eines Gerätesystems (10; 60; 110; 160) zu einer zweiten und dritten Systemkomponente (13, 12; 77, 64; 112, 118; 162, 163) des Gerätesystems (10; 60; 110; 160), wobei die Fernbedienung (14; 63; 113; 161) über eine drahtund kabellose Kommunikationsverbindung (35; 73; 124; 166) oder eine erste Kabel- oder Steckverbindung (36; 74; 125; 167) mit der zweiten Systemkomponente (13; 77; 112; 162) verbindbar ist, mit den Schritten:
▪ die Fernbedienung (14; 63; 113; 161) wird über die erste Kabel- oder Steckverbindung (36; 74; 125; 167) mit der zweiten Systemkomponente (13; 77; 112; 162) verbunden,
▪ ein erster Identifikationscode (ID-1) wird von der Fernbedienung (14; 63; 113; 161) an die zweite Systemkomponente (13; 77; 112; 162) übermittelt und von der zweiten Systemkomponente (13; 77; 112; 162) als erster Vergleichscode (VC₂-1) der zweiten Systemkomponente (13; 77; 112; 162) gespeichert,
▪ ein zweiter Identifikationscode (ID-2) wird von der zweiten Systemkomponente (13; 77; 112; 162) an die Fernbedienung (14; 63; 113; 161) übermittelt und von der Fernbedienung (14; 63; 113; 161) als zweiter Vergleichscode (VC₁-2) der Fernbedienung (14; 63; 113; 161) gespeichert,
**dadurch gekennzeichnet, dass**
▪ der zweite Identifikationscode (ID-2) von der zweiten Systemkomponente (13; 77; 112; 162) über eine zweite Kabel- oder Steckverbindung (48; 86; 132; 168) an die dritte Systemkomponente (12; 64; 118; 163) übermittelt wird und von der dritten Systemkomponente (12; 64; 118; 163) als zweiter Vergleichscode (VC₃-2) der dritten Systemkomponente (12; 64; 118; 163) gespeichert wird und
▪ ein dritter Identifikationscode (ID-3) der dritten Systemkomponente (12; 64; 118; 163) von der dritten Systemkomponente (12; 64; 118; 163) an die zweite Systemkomponente (13; 77; 112; 162) übermittelt wird und von der zweiten Systemkomponente (13; 77; 112; 162) als dritter Vergleichscode (VC₂-3) der zweiten Systemkomponente (13; 77; 112; 162) gespeichert wird.

2. Verfahren nach Anspruch 1, **dadurch gekennzeichnet, dass** neben dem zweiten Identifikationscode (ID-2) der erste Identifikationscode (ID-1) der Fernbedienung (14; 63; 113; 161) von der zweiten Systemkomponente (13; 77; 112; 162) an die dritte Systemkomponente (12; 64; 118; 163) übermittelt wird und der erste Identifikationscode (ID-1) von der dritten Systemkomponente (12; 64; 118; 163) als erster Vergleichscode (VC₃-1) der dritten Systemkomponente (12; 64; 118; 163) gespeichert wird.

3. Verfahren nach Anspruch 2, **dadurch gekennzeichnet, dass** neben dem zweiten Identifikationscode (ID-2) der dritte Identifikationscode (ID-3) der dritten Systemkomponente (12; 64; 118; 163) von der zweiten Systemkomponente (13; 77; 112; 162) an die Fernbedienung (14; 63; 113; 161) übermittelt wird und der dritte Identifikationscode (ID-3) von der Fernbedienung (14; 63; 113; 161) als dritter Vergleichscode (VC₁-3) der Fernbedienung (14; 63; 113; 161) gespeichert wird.

4. Verfahren nach einem der Ansprüche 1 bis 3, **dadurch gekennzeichnet, dass** bei der Datenübertragung zwischen der ersten Systemkomponente (14; 63; 113; 161) und der zweiten Systemkomponente (13; 77; 112; 162) zumindest der Identifikationscode (ID-1, ID-2) der sendenden Systemkomponente (14, 13; 63, 77; 113, 112; 161, 162) mit übertragen wird und der übertragene Identifikationscode (ID-1, ID-2) von der empfangenden Systemkomponente (13, 14; 77, 63; 112, 113; 162, 161) mit dem, in der empfangenden Systemkomponente (13, 14; 77, 63; 112, 113; 162, 161), gespeicherten Vergleichscode (VC₂-1, VC₁-2) verglichen wird.

5. Verfahren nach Anspruch 4, **dadurch gekennzeichnet, dass** bei der Datenübertragung zwischen der ersten und zweiten Systemkomponente (14, 13; 63, 77; 113, 112; 161, 162) neben dem Identifikationscode (ID-1, ID-2) der sendenden Systemkomponente (14, 13; 63, 77; 113, 112; 161, 162) zusätzlich der, in der sendenden Systemkomponente (14, 13; 63, 77; 113, 112; 161, 162), gespeicherte Vergleichscode (VC₁-2, VC₂-1) der empfangenden Systemkomponente (13, 14; 77, 63; 112, 113; 162, 161) mit übertragen wird und von der empfangenden Systemkomponente (13, 14; 77, 63; 112, 113; 162, 161) mit dem, in der empfangenden Systemkomponente (13, 14; 77, 63; 112, 113; 162, 161), gespeicherten eigenen Identifikationscode (ID-2, ID-1) verglichen wird.

6. Verfahren nach einem der Ansprüche 4 bis 5, **dadurch gekennzeichnet, dass** das Gerätesystem (10; 60; 110; 160) in einen sicheren Zustand geschaltet wird, wenn die übertragenen Identifikationscodes (ID-1, ID-2) von den gespeicherten Vergleichscodes (VC₂-1, VC₁-2) abweichen.

7. Verfahren nach einem der Ansprüche 1 bis 3, **dadurch gekennzeichnet, dass** bei der Datenübertragung zwischen der zweiten Systemkomponente (13; 77; 112; 162) und der dritten Systemkomponente (12; 64; 118; 163) zumindest der Identifikationscode (ID-2, ID-3) der sendenden Systemkomponente (13, 12; 77, 64; 112, 118; 162, 163) mit übertragen wird und der übertragene Identifikationscode (ID-2, ID-3) von der empfangenden Systemkomponente (12, 13; 64, 77; 118, 112; 163, 162) mit dem, in der empfangenden Systemkomponente (12, 13; 64, 77; 118, 112; 163, 162), gespeicherten Vergleichscode (VC₃-2, VC₂-3) verglichen wird.

8. Verfahren nach Anspruch 7, **dadurch gekennzeichnet, dass** bei der Datenübertragung zwischen der zweiten und dritten Systemkomponente (13, 12; 77, 64; 112, 118; 162, 163) neben dem Identifikationscode (ID-2, ID-3) der sendenden Systemkomponente (13, 12; 77, 64; 112, 118; 162, 163) zusätzlich der, in der sendenden Systemkomponente (13, 12; 77, 64; 112, 118; 162, 163), gespeicherte Vergleichscode (VC₂-3, VC₃-2) der empfangenden Systemkomponente (12, 13; 64, 77; 118, 112; 163, 162) mit übertragen wird und von der empfangenden Systemkomponente (12, 13; 64, 77; 118, 112; 163, 162) mit dem, in der empfangenden Systemkomponente (12, 13; 64, 77; 118, 112; 163, 162), gespeicherten eigenen Identifikationscode (ID-3, ID-2) verglichen wird.

9. Verfahren nach Anspruch 8, **dadurch gekennzeichnet, dass** das Gerätesystem (10; 60; 110; 160) in einen sicheren Zustand geschaltet wird, wenn die übertragenen Identifikationscodes (ID-2, ID-3) von den gespeicherten Vergleichscodes (VC₃-2, VC₂-3) abweichen.

10. Verfahren nach einem der Ansprüche 1 bis 9, **dadurch gekennzeichnet, dass** die dritte Systemkomponente (118) über eine dritte Kabel- oder Steckverbindung (135) mit einer vierten Systemkomponente (114) des Gerätesystems (110) verbunden wird, wobei ein vierter Identifikationscode (ID-4) von der vierten Systemkomponente (114) an die dritte Systemkomponente (118) übertragen und von der dritten Systemkomponente (118) als vierter Vergleichscode (VC₃-4) der dritten Systemkomponente (118) gespeichert wird und der dritte Identifikationscode (ID-3) der dritten Systemkomponente (118) an die vierte Systemkomponente (114) übertragen und von der vierten Systemkomponente (114) als dritter Vergleichscode (VC₄-3) der vierten Systemkomponente (114) gespeichert wird.

11. Verfahren nach Anspruch 10, **dadurch gekennzeichnet, dass** der vierte Identifikationscode (ID-4) von der dritten Systemkomponente (118) an die zweite Systemkomponente (112) übertragen und von der zweiten Systemkomponente (112) als vierter Vergleichscode (VC₂-4) der zweiten Systemkomponente (112) gespeichert wird und der vierte Identifikationscode (ID-4) anschließend von der zweiten Systemkomponente (112) an die erste Systemkomponente (113) übertragen und von der ersten Systemkomponente (113) als vierter Vergleichscode (VC₁-4) der ersten Systemkomponente (113) gespeichert wird.

12. Verfahren nach einem der Ansprüche 10 bis 11, **dadurch gekennzeichnet, dass** der erste und zweite Identifikationscode (ID-1, ID-2) von der dritten Systemkomponente (118) an die vierte Systemkomponente (114) übertragen werden und die übertragenen Identifikationscodes (ID-1, ID-2) von der vierten Systemkomponente (114) als erster und zweiter Vergleichscode (VC₄-1, VC₄-2) der vierten Systemkomponente (114) gespeichert werden.

13. Gerätesystem (10; 60; 110; 160) zur Durchführung eines Verfahrens zur eindeutigen Zuordnung nach einem der Ansprüche 1 bis 12, aufweisend:
▪ eine als Fernbedienung ausgebildete erste Systemkomponente (14; 63; 113; 161) mit einer Eingabeeinrichtung (32) und einer ersten Kontrolleinheit (34), die die Eingaben der Eingabeeinrichtung (32) in Steuerbefehle und Daten umwandelt,
▪ eine zweite Systemkomponente (13; 77; 112; 162), die über eine erste Kommunikationsverbindung (35, 36; 73, 74; 124, 125; 166, 167) mit der Fernbedienung (14; 63; 113; 161) verbindbar ist, wobei die erste Kommunikationsverbindung ((35, 36; 73, 74; 124, 125; 166, 167)) als draht- und kabellose Kommunikationsverbindung (35; 73; 124; 166) oder als erste Kabel- oder Steckverbindung (36; 74; 125; 167) ausgebildet ist,
▪ eine dritte Systemkomponente (12; 64; 118; 163), die über eine zweite Kommunikationsverbindung (48; 86; 132; 168) mit der zweiten Systemkomponente (13; 77; 112; 162) verbindbar ist, wobei die zweite Kommunikationsverbindung als zweite Kabeloder Steckverbindung (48; 86; 132; 168) ausgebildet ist, und
▪ eine Sicherheitseinheit (141), die die Fernbedienung (14; 63; 113; 161) und die zweite Systemkomponente (13; 77; 112; 162) einander eindeutig zuordnet,
**dadurch gekennzeichnet, dass** die Sicherheitseinheit (141) zusätzlich die zweite Systemkomponente (13; 77; 112; 162) und die dritte Systemkomponente (12; 64; 118; 163) einander eindeutig zuordnet.

14. Gerätesystem nach Anspruch 13, **dadurch gekennzeichnet, dass** die Sicherheitseinheit (141) zusätzlich die Fernbedienung (14; 63; 113; 161) und die dritte Systemkomponente (12; 64; 118; 163) einander eindeutig zuordnet.

15. Gerätesystem nach einem der Ansprüche 13 bis 14, **dadurch gekennzeichnet, dass** die Sicherheitseinheit (141) einen ersten, zweiten und dritten Transceiver (142, 143, 144) sowie ein erstes, zweites und drittes Speicherelement (145, 146, 147) aufweist, wobei der erste Transceiver (142) und das erste Speicherelement (145) in der Fernbedienung (14) angeordnet sind, der zweite Transceiver (143) und das zweite Speicherelement (146) in der zweiten Systemkomponente (13) angeordnet sind und der dritte Transceiver (144) und das dritte Speicherelement (147) in der dritten Systemkomponente (12) angeordnet sind.

16. Gerätesystem nach Anspruch 15, **dadurch gekennzeichnet, dass** das erste und dritte Speicherelement (145, 147) jeweils mindestens eine Speicherstelle und das zweite Speicherelement (146) mindestens zwei Speicherstellen zum Speichern von Vergleichscodes aufweisen, wobei das erste Speicherelement (145) einen zweiten Vergleichscode (VC₁-2) der zweiten Systemkomponente (13) speichert, das zweite Speicherelement (146) einen ersten Vergleichscode (VC₂-1) der Fernbedienung (14) und einen dritten Vergleichscode (VC₂-3) der dritten Systemkomponente (12) speichert und das dritte Speicherelement (147) einen zweiten Vergleichscode (VC₃-2) der zweiten Systemkomponente (13) speichert.

17. Gerätesystem nach Anspruch 16, **dadurch gekennzeichnet, dass** das erste und dritte Speicherelement (145, 147) jeweils mindestens zwei Speicherstellen zum Speichern von Vergleichscodes aufweisen, wobei das erste Speicherelement (145) zusätzlich einen dritten Vergleichscode (VC₁-3) der dritten Systemkomponente (12) speichert und das dritte Speicherelement (147) zusätzlich einen ersten Vergleichscode (VC₃-1) der Fernbedienung (14) speichert.

18. Gerätesystem nach einem der Ansprüche 13 bis 17, **dadurch gekennzeichnet, dass** die dritte Systemkomponente als Werkzeuggerät (12) mit einer Bearbeitungseinheit (15), die ein Bearbeitungswerkzeug (17) und einen Antriebsmotor (19) umfasst, und einer motorischen Vorschubeinheit (16), die einen Führungsschlitten (26) und einen Vorschubmotor (27) umfasst, ausgebildet ist und die zweite Systemkomponente als Elektronikaggregat (13) mit einer Elektronikeinheit (41) und einem Steuerelement (42) für die Bearbeitungseinheit (15) und einer weiteren Elektronikeinheit (43) und einem weiteren Steuerelement (44) für die motorische Vorschubeinheit (16) ausgebildet ist.

19. Gerätesystem nach einem der Ansprüche 13 bis 17, **dadurch gekennzeichnet, dass** die dritte Systemkomponente als Bearbeitungseinheit (64) mit einem Bearbeitungswerkzeug (66), einem Antriebsmotor (96), einer dritten Elektronikeinheit (98) und einer dritten Kontrolleinheit (99) ausgebildet ist und die zweite Systemkomponente als motorische Vorschubeinheit (77) mit einem Vorschubmotor (91), einer zweiten Elektronikeinheit (93) und einer zweiten Kontrolleinheit (94) ausgebildet ist.

20. Gerätesystem nach einem der Ansprüche 13 bis 17, **dadurch gekennzeichnet, dass** das Gerätesystem (110) eine vierte Systemkomponente (114) aufweist, die über eine dritte Kabel- oder Steckverbindung (135) mit der dritten Systemkomponente (118) verbindbar ist, wobei die Sicherheitseinheit (141) zusätzlich einen vierten Transceiver und ein viertes Speicherelement aufweist, die in der vierten Systemkomponente (114) angeordnet sind.

21. Gerätesystem nach Anspruch 20, **dadurch gekennzeichnet, dass** die vierte Systemkomponente als Bearbeitungseinheit (114) mit einem Bearbeitungswerkzeug (66) und einem Antriebsmotor (116) ausgebildet ist, die dritte Systemkomponente als motorische Vorschubeinheit (118) mit einem Vorschubmotor (121) ausgebildet ist und die zweite Systemkomponente als Elektronikaggregat (112) mit einer ersten Elektronikeinheit (126) und einem ersten Steuerelement (127) für die Bearbeitungseinheit (114) und einer zweiten Elektronikeinheit (128) und einem zweiten Steuerelement (129) für die motorische Vorschubeinheit (118) ausgebildet ist.
